# EUROPEAN PATENT APPLICATION

(11) **EP 0 903 082 A1**
(43) Date of publication of application: **24.03.1999**
(21) Application number: 97115905.8
(22) Date of filing: 12.09.1997
(51) Int. Cl.: A21D 2/00, A21D 8/04

(54) **Fermentation flavors for bakery products**

(71) Applicant: The Eggo Company, Battle Creek, Michigan 49016 (US)
(72) Inventor: Parliment, Thomas Holden, New City, New York 10956 (US); Gimenez-Mitsotakis, Peggy Ann, Rock Tavern, New York 12575 (US)
(74) Representative: Grimm, Ekkehard, Dipl.-Phys.

(57) **Abstract**

Flavorful baked products, such as bread, bagels, pastry, cakes, cereal, cookies, biscuits, savory crackers and snack products, are prepared using a liquid ferment typically containing a mixture of microbes that produce lactic acid and acetic acid, such as a mixture of *Lactobacillus* and *Gluconobacter* species that grow in concert when incubated at about 25° to 37°C with flour and water to achieve a ferment that has a pH of about 3.6 to 3.9, a titratable acidity of about 0.04 to 0.3 meq/g, a lactic acid concentration of from about 0.5 to 2%, an acetic acid concentration of from about 0.1 to 1%, and a viscosity of less than about 100 cps. The liquid ferment is maintained in an active state such that fermented flavor can be continuously generated by adding water and flour and drawing of liquid such that the average residency time is from 12 to 48 hours. *Saccharomyces chevalieri* is used as part of the microbial complement in preferred embodiments. When used for making bagels, concentrations of about 3 to 10% of this ferment added to the dough yield bagels that have a chewy texture and good flavor without a retarding step.

## Description

### Technical Field

This invention relates to the addition of certain liquid fermented flavor/texturizing materials to bakery goods to develop improved flavors, textures and shelf-life stability.

Dough fermentation prior to baking has been known since ancient times to produce loaves and other baked products that have desirable attributes such as improved flavors. The term "fermentation" covers the biochemical changes brought about by microorganisms and/or enzymes present in doughs or mashes during incubation. The physicochemical properties of ingredients in the formulations are changed during the process, resulting in alterations in volume, texture, taste, odor, color, shelf life, and consistency.

In modern bakeries fermentation is typically done in a batch dough process which requires time and controlled environment chambers, and these increase production costs. This is particularly true of sour dough bakery products and those having some properties of sourdoughs because these generally require additional residence time in a fermenter for proper flavor development. In some cases, fermentation is carried out at different temperatures to develop certain flavor notes. Historically, sourdoughs were made by adding a mother sour inoculum to a flour/water mixture, and the resulting dough mass was mixed and allowed to ferment for several days. The product was withdrawn and a portion was retained as a new mother sour inoculum for the next batch. With multiple fermentation steps, the overall process can be very inefficient for commercial scale operations.

### Background of the Invention

Various methods have been devised for the mass production of yeast doughs and sourdoughs, and the processing techniques vary with the type of bakery product produced.

In U.S. Pat. No. 2,953,460, Baker disclosed a process involving the delivery of a pre-established, fermented sponge that was added to a pre-mixer along with flour and other ingredients at the outset of a continuous bread dough manufacturing process. The inconvenient and cumbersome operation of making the sponge could be obviated by using a fermented yeast liquor instead (column 16, lines 19 to 35). This was made by mixing yeast in water containing sugar and other yeast nutrients and fermenting for several hours. The various ingredients, *i.e*., dry ingredients, shortening and improving agents, were then mixed with the brew in a pre-mixer.

Doerry, *et al*., described further uses of liquid, yeast preferments by many bakeries in continuous baking processes (*American Institute of Baking Technical Bulletin* VII, issue 6, June 1985, pages 1-9). Parameters involved in the processes differ widely from bakery to bakery, but typically involve the fermentation of about 30 to 50% of the flour in a recipe with some sugar, buffering agents, yeast, and water. A lower fermentation temperature, *e.g*., 78°F rather than 86°F, and a long fermentation time could produce a liquid preferment useful for making superior bread products.

For sourdoughs, special dough fermenting is employed. These traditionally involve special fermentation procedures and selection of mother sours or mixed microbial mixtures as leavening agents for the doughs. Fermentation which includes a holding period for a number of hours in a cool environment is especially preferred for the full flavor development of some products. These processes are often described as "retarded," as the growth conditions retard the development of ordinary yeasts and promote lactic and acetic acid-producing bacteria which provide essential microorganism metabolic by-products for the characteristic odors and flavors of sourdoughs and products having sourdough characteristics.

Commercial sourdough preparations include bulk dough fermentations that can be batchwise or continuous. (For a review, see Meuser, F., *Cereal Foods World 40*:114-122, March 1995). Since batchwise preparations not only require many tanks but are also time-consuming and difficult to automate, continuous fermentations are preferred, or combinations of batch and continuous methods. The various systems typically involve a two-stage fermentation in at least one fermenter.

Freeze-dried natural sour dough starters such as those disclosed in U.S. Pat. No. 4,140,800 to Kline may be employed, but these are typically used in lieu of a mother sour inoculum. The actual bakery product manufacture is similar, and suffers the same disadvantages regarding tank volume and complex fermentation steps observed with conventional sponge sourdough formulations.

Attempts are being made to render dough preparation more flexible with regard to the time and temperature shifts required for fermentation. As summarized by Meuser, cited above, in some cases, ripened yeast suspensions (liquid ferments) are employed, but where closed fermentation tanks are used, the systems are inefficient because yeast proliferation is poor under anaerobic conditions. Moreover, excessive foaming often plagues the preparation of liquid ferments. Fermentation tanks must be of a sufficient size to accommodate this foaming and prevent overflows.

Meloan and Doerry described a typical bagel production as not including a fermentation step before make-up because fermented doughs tend to produce bagels with a non-uniform grain structure that may be difficult to shape into rings (*American Institute of Baking Technical Bulletin* X, issue 4, April 1988, page 8). Raw bagels are placed on sheet pans and either proofed or, more commonly, placed for 12 to 18 hours in a retarder at 35° to 42°F (or sometimes even frozen). The refrigeration tends to develop a better flavor and aroma than bagels subjected to conventional continuous processing.

It would be desirable to have improved processes for economical production of bakery goods, particularly those having fermented notes such as those expected of good bagels. It would also be desirable to have a rapid and economical process for producing bakery products without the elaborate fermentation steps and foaming problems typically observed.

### Summary of the Invention

It is an object of the invention to provide fermented flavor/texturizing materials for bagels and other baked goods.

It is a further and more specific object of the invention to provide liquid ferments by a continuous process.

These and other objects are achieved by the present invention, which provides fermented flavor concentrates for yeast raised products, particularly bagels. In preferred embodiments, ferment concentrates of the invention continuously produce a balanced array of microorganisms that provide the requisite acids and aromatic compounds necessary to impart desirable characteristics to the dough to which the ferment is added. When concentrates of the invention are added to dough, a retarding step in product manufacture can be eliminated without compromising product texture, odor or flavor.

In a typical practice of the invention, flavorful baked products are prepared by: a) preparing a liquid ferment in a fermentation tank, wherein the liquid ferment contains flour, water and microbially-stable, mixed cultures, the ratio of flour to water in the ferment being from about 1:0.5 - 2.0 and the ferment containing at least one acid-generating microbe; b) maintaining the liquid ferment in an active state such that fermented flavor is generated and the average residence time for the ferment within the tank is at least 12 hours; c) continuously adding water and flour to the fermentation tank in an amount that essentially equals the amount of liquid ferment being withdrawn from the tank; e) adding the liquid ferment to a dough formulation, such that the liquid ferment constitutes from about 1 to about 15% by weight of the formulation; and f) baking the dough.

In preferred embodiments, the liquid ferment contains a mixture of microbes that produce lactic acid and/or acetic acid, preferably both, such as a mixture of *Lactobacillus* and *Gluconobacter* species that grow in concert when incubated at about 25° to 37°C with flour and water for at least about 24 hours to achieve a ferment that has a pH of about 3.6 to 3.9, a titratable acidity of about 0.04 to 0.3 meq/g (more narrowly about 0.10 to 0.26 meq/g), a lactic acid concentration of from about 0.5 to 2%, an acetic acid concentration of from about 0.1 to 1%, and a viscosity of less than about 100 cps. A *Sacchromyces* yeast, such as *Saccharomyces chevalieri*, should be included as part of the microbial complement to generate aromatic compounds. In an illustrative embodiment, when used for making bagels, concentrations of about 3 to 10% of this ferment added to the dough results in bagels that have a chewy texture and good flavor without a retarding step.

### Brief Description of the Figures

Figure 1 is a graph showing the rise and leveling off of acidity over time.
Figure 2 is a line graph illustrating titratable acidity over time (for two different flour + water to starter ratios) in the preparation of a ferment of the invention.
Figure 3 is a diagram of a continuous process for producing fermented flavor for baked goods using a process of the invention.

### Detailed Description of the Invention

This invention is based upon the formulation of a fluid concentrate with the desired attributes that can be used as a dough additive to save fermentation steps in the manufacture of bagel and similar bakery products. When used in the production of flavorful baked products, the ferment concentrate can eliminate a retarding step during production, yet provide bakery products having the character of those prepared with a retarding step. By preparing the liquid ferment in the continuous fashion described in this case, foaming is eliminated. Fermentation of a mixture of one part flour, one part water plus microorganisms in a batch system will result in substantial foaming of the relatively viscous fluid. In contrast the liquid medium which is present during the continuous fermentation process of this invention will not retain evolving carbon dioxide, and thus, little or no foam is produced.

In the practice of the invention, flavorful baked products are prepared by: a) preparing a liquid ferment in a fermentation tank, wherein the liquid ferment contains flour, water and, microbially-stable, mixed cultures, the ratio of flour to water in the ferment being from 1:0.5 - 2.0. and the ferment containing at least one acid-generating microbe, b) maintaining the liquid ferment in an active state such that fermented flavor is generated and the average residence time for the ferment within the tank is at least 12 hours; c) continuously adding water and flour to the fermentation tank in an amount that essentially equals the amount of liquid ferment being withdrawn from the tank; e) adding the liquid ferment to a dough formulation, such that the liquid ferment constitutes from about 1 to about 15% by weight of the formulation; and f) baking the dough.

Any microorganisms commonly used for bread production can be employed as primary organisms for starting the liquid ferment. Preferred ferments contain a lactic acid-generating microbe, an acetic acid-generating and an aromatic-generating microbe. Examples include, but are not limited to, *Lactobacillus* species, *Gluconobacter* species, and *Saccharomyces* species. The microbes must be ones that grow together in concert in the fermentation tank to provide a balanced array of microbial by-products having unexpectedly good properties. An aromatic compound-generating yeast, such as *Saccharomyces chevalieri*, is particularly preferred in these embodiments.

As summarized above, the ferment is prepared initially by mixing flour and water in a ratio of about 1:1 and adding microorganisms. At this stage, the original mixture is typically viscous, *e.g*., as high as about 40,000 cps. After fermentation, the viscosity drops to less than about 2000 cps, preferably less than 100 cps, and in some cases less than about 50 cps so that the ferment is a fluid, pumpable, and flowable liquid. As the microorganisms grow they produce carbon dioxide. Since the viscosity of the ferment is low, the carbon dioxide is not held in the ferment, but escapes easily with little or no resulting foam.

The liquid ferment is held in a tank for a period of time under conditions to generate fermented flavor. This is typically achieved by maintaining the ferment at about 25 to about 37°C, more narrowly for about 30 to about 35°C, for at least about 12 hours. A preferred residence time is at least about 24 hours, and in some cases up to about 48 hours, for full flavor development. As shown in the Examples that follow, aromatic compounds, such as ethyl acetate, isoamyl alcohol, isoamyl acetate, are formed during the fermentation.

Acids are also formed. In preferred embodiments, the liquid ferment is self-maintained at pH of about 3.2 to about 3.9, more narrowly, of about 3.6 to about 3.9. The titratable acidity typically varies between 0.04 to 0.3 meq/g. In some embodiments, the titratable acidity varies between about 0.15 to 0.26 meq/g; in other embodiments, it is lower, *i.e*., from about 0.1 to about 0.15 meq/g. In illustrative embodiments, the liquid ferment contains from about 0.5 to 2% lactic acid and from about 0.1 to 1% acetic acid. One embodiment contains about 1.3 to 1.4% lactic acid and about a tenth of that amount of acetic acid.

Once the ferment is made up and ready to be drawn off, it is drawn off continuously or essentially continuously, *i.e*., with short periods of interruptions such as at 0 to 15 minute intervals, with 5 minute intervals or less being preferred. Flour and water are correspondingly added to the tank. The ferment can be used in one location, or shipped frozen or refrigerated to another bakery location for addition to doughs. Addition of water and flour to the ferment may also be done in an essentially continuous manner.

The liquid ferment of the invention can be added to the dough of any bakery product, including, but not limited to, bread, bagels, pastry, cakes, cereal, cookies, biscuits, savory crackers, and snack products, and mixes or ingredient premixes for any of these. It is particularly useful for providing piquancy and desirable texture to yeast-leavened products comprising yeast, flour, water and/or milk and other ingredients typical of such products.

In the production of bagels that are chewy and have a hint of acidity, the liquid ferment is added to the dough at a level of about 3 to about 10% by weight. As illustrated in the examples that follow, in some embodiments, additional yeast, *i.e*., about 1.5 to 2.5 times the usual amount, is added to the dough to account for the absence of a retarding step. The bagel dough is divided, formed into bagel shapes, proofed for a half hour or so, e.g., at 30°C/85% relative humidity, cooked by bathing in boiling water and/or steaming, and baked.

An advantage of the invention is that the process can be used to make manufactured bakery products such as bagels having the flavor, aroma, and texture of a bakery shop bagel without an intervening retarding step, which is typically at least about 5 or 6 hours at about 4.4°C. Thus, the process of the invention provides a distinct advantage over conventional bagel manufacture. Holding vats, retarding steps, and excessive foaming are eliminated.

It is another advantage of the invention that, in embodiments containing a mixture of *Saccharomyces, Lactobacillus* and *Gluconobacter* species, all three varieties of microorganisms grow in concert to produce the aromatic compounds and acidity required for the character of baked products made from doughs that are ordinarily fermented for extended periods to achieve the required piquant notes.

It is a further advantage of the invention that the process can be adapted for continuous, semi-continuous, or batch dough processes. It is particularly suited for continuous operations.

The following examples are presented to further illustrate and explain the present invention and should not be taken as limiting in any regard. Unless otherwise indicated, all parts and percentages are by weight and are based at the stage of processing being described.

### Example 1

To simulate a continuous process of the invention in a bench-top operation, a liquid ferment was prepared composed of 1 part mother ferment, 8 parts flour and 10 parts water. This was mixed and allowed to ferment for a total of 8 days. At the beginning of each day, one-half of the ferment was removed for analysis and an equal weight of 8:10 flour/water added. Thus, the total weight of the ferment remained constant. The fermentation was conducted at approximately 22°C. The fermentation was analyzed for acid composition. Acid production correlated with degree of fermentation. Results of the analysis are given below:

| Age (Days) | % Lactic Acid | % Acetic Acid | pH | TA (meq/g) |
|---|---|---|---|---|
| 1 | 1.37 | 0.11 | 3.89 | 0.121 |
| 2 | 0.94 | <0.05 | 3.86 | 0.109 |
| 3 | 1.04 | 0.11 | 3.88 | 0.124 |
| 4 | 1.01 | 0.12 | 3.85 | 0.128 |
| 5 | 1.02 | 0.14 | 3.87 | 0.127 |
| 6 | 0.87 | 0.14 | 3.92 | 0.110 |
| 7 | 0.97 | 0.16 | 3.89 | 0.125 |
| 8 | 1.07 | 0.19 | 3.85 | 0.144 |

In addition, the product thinned out to a significant degree over each 24-hour period.

### Example 2

A batch fermentation was conducted in a 75 gallon kettle to determine the residence time needed to develop desirable acidity in the ferment. This experiment was the third in a series of batch fermentations. The mother or starter ferment was the product of that generated in Example 1. A 500 pound ferment was made by combining 204.5 pounds of flour, 250 pounds of water and 45.5 pounds of starter. During a 48-hour period acidity rose as follows:

| Time (Hour) | pH | TA (meq/g) |
|---|---|---|
| 0 | 4.7 | 0.037 |
| 18 | 3.78 | 0.143 |
| 24 | 3.79 | 0.163 |
| 48 | 3.76 | 0.182 |

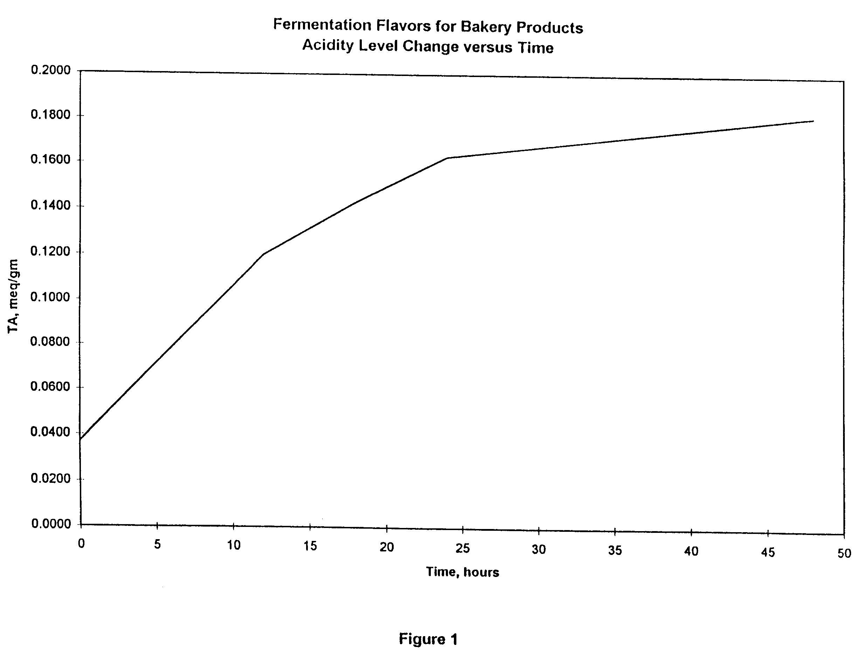

These results are depicted in Fig. 1. After eighteen hours the acidity had essentially leveled off. An average residence time of at least 12 hours is therefore seen as necessary for this invention. As can be seen from the data and Fig. 1, a residence time of 12 hours is required to generate a TA of approximately 0.12 meq/g which corresponds to about 1% lactic acid, 0.1% acetic acid and a pH of 3.9.

### Example 3

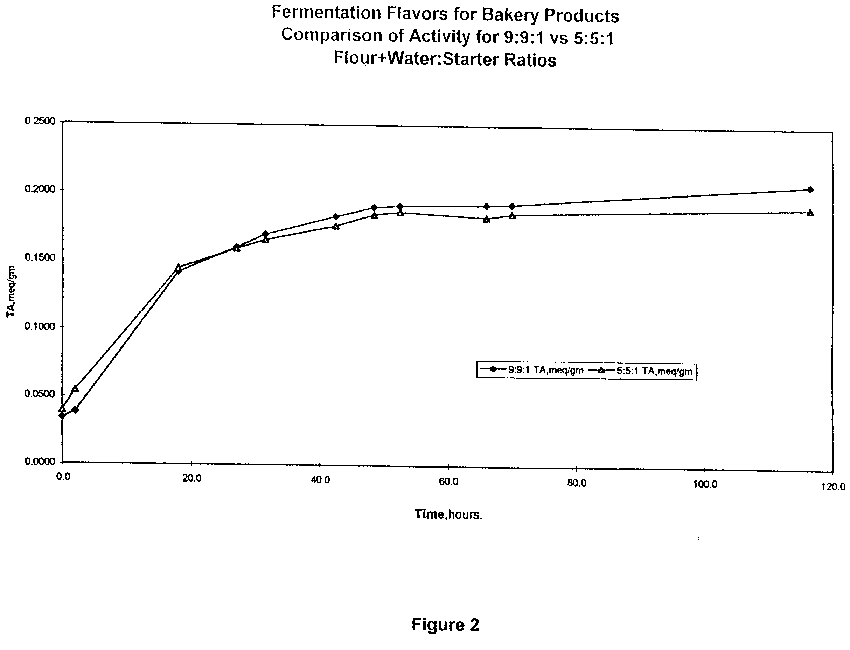

This example illustrates another analysis of the liquid ferment of the invention; however, with different levels of starter ferment. Two ferments having a flour:water:starter ratio of 9:9:1 and 5:5:1 were prepared and each ferment was held for 116.5 hours in a batch process at ambient temperature (about 23° C). The titratable acidity rose steadily, and in a similar fashion, in both samples for about 16 hours and then leveled off after about 24 hours. A titratable acidity profile is illustrated in Figure 2. These results demonstrate that the initial level of starter ferment in the batch may vary and still produce acceptable product.

| Age (hrs.) | 9:9:1 | | 5:5:1 | |
|---|---|---|---|---|
| STARTER | pH | TA | pH | TA |
| | 3.78 | 0.1645 | 3.78 | 0.1645 |
| 0 | 5.05 | 0.034 | 4.79 | 0.0395 |
| 2 | 4.87 | 0.0385 | 4.43 | 0.0545 |
| 18 | 3.93 | 0.1415 | 3.98 | 0.1445 |
| 27 | 3.88 | 0.1595 | 3.93 | 0.1585 |
| 3.15 | 3.88 | 0.169 | 3.93 | 0.165 |
| 42.5 | 3.86 | 0.1925 | 3.90 | 0.1755 |
| 48.5 | 3.83 | 0.1895 | 3.89 | 0.1715 |
| 52.5 | 3.84 | 0.1905 | 3.89 | 0.186 |
| 66 | 3.85 | 0.1915 | 3.88 | 0.1823 |
| 70 | 3.86 | 0.192 | 3.87 | 0.185 |
| 116.5 | 3.83 | 0.2075 | 3.85 | 0.1905 |

### Example 4

Pilot plant production of a continuously produced fermented flavor of the present invention is described in this example.

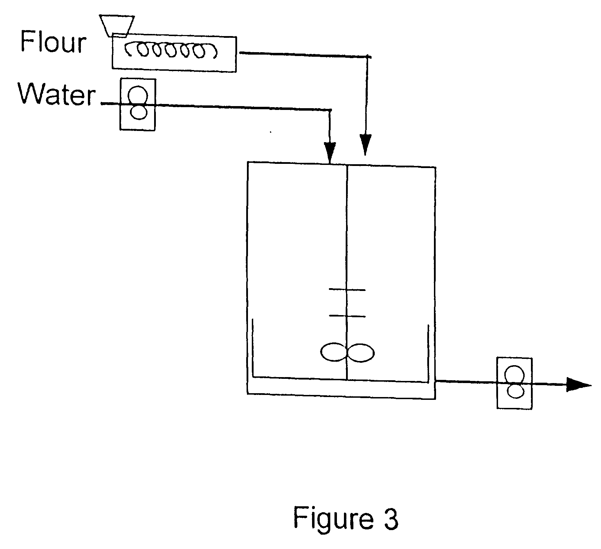

To start the process, a 500 pound batch of fermented flavor is initiated by mixing together 204.55 pounds of flour, 250.00 pounds of water and 45.45 pounds of starter ferment. This liquid ferment is propagated for two days for optimum flavor and texture development. At this point, the continuous process is started. Flour is delivered into the batch kettle at the rate of about 0.08 pounds per minute using screw feeder that is fed by a vibratory feeder. Water is fed into the kettle at the same rate using a metering pump. Liquid ferment is drawn from the bottom of the kettle at a rate of 0.16 pounds per minute using a positive displacement pump. A timer is placed on the starter motor of the scraper and agitator in the kettle to periodically turn on (approximately five minutes every two hours). The process is illustrated in Figure 3.

The physical parameters observed over time in the above continuous production of a liquid ferment of the invention were recorded. Samples were taken at intervals as indicated in the table below. The yeast count, pH, titratable acidity, % lactic acid, and levels of ethyl acetate, isoamyl alcohol and isoamyl acetate were measured. The following results were obtained:

| Age (hrs) | pH | TA (meq/gm) | yeast count (x 10⁻⁶) | % lactic | Aromatic levels, ug/g | | |
|---|---|---|---|---|---|---|---|
| | | | | | ethyl acetate | isoamyl alcohol | isoamyl acetate |
| 0 | 3.91 | 0.141 | 13 | -- | 609 | 38.7 | 2.0 |
| 2 | 3.83 | 0.135 | -- | 1.05 | -- | -- | -- |
| 7 | 3.71 | 0.147 | 10 | 1.0 | 470 | 33.7 | 2.2 |
| 31 | 3.67 | 0.157 | -- | 1.15 | -- | -- | -- |
| 36 | 3.67 | 0.158 | 9.1 | 1.34 | 540 | 38.5 | 7.4 |
| 40 | 3.67 | 0.152 | -- | 1.33 | -- | -- | -- |
| 51 | 3.74 | 0.123 | 9.6 | 1.19 | 470 | 8.4 | 2.5 |
| Viscosity At time Zero ≃ 40,000 cps Viscosity After 51 hours ≃ 40 cps | | | | | | | |

### Example 5

In this example, bagels made using a bagel dough of the invention and no retard are compared to those made using a conventional formula processed with a 6-hour retarding step.

About 260 bagels are prepared in each run. The yeast is hydrated in a portion of the water at 55° to 60°F. The ingredients are mixed at low speed for 30 seconds and then the yeast slurry is added. The dough is mixed for another 1.5 minutes at low speed, and then 10 minutes at a higher speed until the dough is 80°F and developed. The bagels are then shaped and allowed to proof at 85°F/85% R.H. The control bagels are then retarded at 40°F for 6 hours prior to cooking, drying and baking (9.5 minutes). Experimental bagels are cooked, dried, and baked under identical conditions without the six-hour retard step.

The control and experimental doughs were formulated as follows:

| **Control** | | |
|---|---|---|
| Ingredients | Bakers % | Grams |
| Flour | 100.00 | 15890 |
| Water | 56.00 | 8898 |
| HF Corn Syrup | 3.75 | 595 |
| Yeast | 1.00 | 159 |
| Salt | 2.00 | 318 |

| **Experimental** | | | |
|---|---|---|---|
| Ingredients | Bakers % | Grams | |
| Flour | 100.00 | 15110 | |
| Water | 56.00 | 8118 | |
| HF Corn Syrup | 3.75 | 595 | |
| Yeast | 2.00 | 318 | |
| Salt | 2.00 | 318 | |
| Ferment (as produced in Example 4) | 6.00 | 1561 | |
| | | | produced in Example 4) |

In taste tests by a panel of at least 10 bagel experts and bagel makers, the experimental bagels prepared using the ferment of the invention had a comparable aromatic composition, acidity, chewiness, and crumb character to the control bagels.

The above description is for the purpose of illustrating and not limiting the present invention, and teaching the person of ordinary skill in the art how to practice the invention. It is not intended to detail all those obvious modifications and variations of it which will become apparent to the skilled worker upon reading the description. It is intended, however, that all such obvious modifications and variations be included within the scope of the present invention as defined in the appended claims. The claims are meant to cover the claimed components and steps in any sequence which is effective to meet the objectives there intended, unless the context specifically indicates the contrary.

## Claims

1. A process for the production of flavorful baked products comprising the steps of:
a) preparing a liquid ferment in a fermentation tank, said liquid ferment containing flour, water and microbially-stable, mixed cultures, the ratio of flour to water in the ferment being from 1:0.5 - 2.0 and the ferment containing at least one acid-generating microbe,
b) maintaining the liquid ferment in an active state such that fermented flavor is generated and the average residence time for the ferment within the tank is at least 12 hours;
c) continuously or essentially continuously adding water and flour to the fermentation tank in an amount that essentially equals the amount of liquid ferment being withdrawn from the tank;
e) adding the liquid ferment to a dough formulation, such that the liquid ferment constitutes from 1 to 15% by weight of the formulation; and
f) baking the dough.

2. A process according to claim 1 wherein the liquid ferment contains a lactic acid-generating microbe and an acetic acid-generating microbe.

3. A process according to claim 2 wherein the liquid ferment is self-maintained at pH of about 3.2 to 3.9.

4. A process according to claim 3 wherein the liquid ferment contains from about 0.5 to 2% lactic acid and from about 0.1 to 1% acetic acid.

5. A process according to claim 1 wherein the liquid ferment is added to a bread, bagel, pastry or cereal dough.

6. A process according to claim 5 wherein the liquid ferment is added to the dough at a level of about 3 to 10% by weight.

7. A process according to claim 5 wherein the liquid ferment contains a lactic acid-generating microbe, an acetic acid-generating microbe and an aromatic-generating yeast.

8. A process according to claim 7 wherein the liquid ferment is self-maintained at pH of about 3.2 to 3.9.

9. A process according to claim 8 wherein the liquid ferment contains from 0.5 to 2% lactic acid and from 0.1 to 1% acetic acid.

10. A process according to claim 9 wherein the liquid ferment has an average fermentation time of at least about 24 hours.

11. A process according to claim 10 wherein the liquid ferment has a titratable acidity of from about 0.04 to 0.3 meq/g.

12. A process according to claim 11 wherein the titratable acidity is from about 0.10 to 0.26 meq/g.

13. A process according to claim 11 wherein the liquid ferment added to the dough has a viscosity of less than about 100 cps.

14. A process according to claim 11 wherein the yeast is *Saccharomyces chevalieri*.

15. A process for the production of flavorful baked products comprising the steps of:
a) preparing a liquid ferment in a fermentation tank, said liquid ferment containing flour, water and microbially-stable, mixed cultures, the ratio of flour to water in the ferment being from about 1:0.5 - 2.0 and the ferment containing a lactic acid-generating microbe, an acetic acid-generating microbe and an aromatic-generating yeast.
b) maintaining the liquid ferment in an active state at about 25° to 37°C such that fermented flavor is generated and the average residence time for the ferment within the tank is at least about 24 hours at a pH of about 3.6 to 3.9;
c) continuously or essentially continuously adding water and flour to the fermentation tank in an amount that essentially equals the amount of liquid ferment being withdrawn from the tank;
e) adding the liquid ferment to a dough formulation, such that the liquid ferment constitutes from 1 to 15% by weight of the formulation; and
f) baking the dough.

16. A process according to claim 15 wherein the microbial cultures comprise a mixture of *Saccharomyces*, *Lactobacillus*, are *Gluconobacter* species.

17. A process according to claim 16 wherein the liquid ferment has a titratable acidity of from 0.04 to 0.3 meq/g. and exhibits a viscosity of less than about 100 cps.

18. A process according to claim 17 wherein the ferment contains from about 0.5 to 2% lactic acid and from about 0.1 to 1% acetic acid.

19. A process according to claim 18 wherein the dough is a bagel dough, and wherein the bagel dough is divided, formed into bagel shapes, proofed, cooked and baked without an intervening retarding step.

20. A process according to claim 19 wherein the liquid ferment is added to the bagel dough at a level of about 3 to 10% by weight.
